Europäisches Patentamt

(19) European Patent Office

Office européen des brevets

(11) Publication number: **0 313 369**
**A2**

(12) **EUROPEAN PATENT APPLICATION**

(21) Application number: **88309894.9**

(22) Date of filing: **20.10.88**

(51) Int. Cl.⁴: **B 24 B 9/16**

(30) Priority: **20.10.87 ZA 877876    28.07.88 ZA 885545**

(43) Date of publication of application:
**26.04.89 Bulletin 89/17**

(84) Designated Contracting States:
**AT BE CH DE ES FR GB GR IT LI LU NL SE**

(71) Applicant: **DIMATIC LIMITED**
**Third Floor The Albany South Esplanade**
**St. Peter Port Guernsey Channel Islands  (GB)**

(72) Inventor: **Herson, David Trevor**
**84 Daniel Malan Avenue**
**Florida Park Transvaal  (ZA)**

**Abraham, Michael Craig**
**439 Diane Road**
**Oliverdale Ext 2 Randburg Transvaal  (ZA)**

**Lerner, Moshe Bezalel**
**9 Birt Street Raedene**
**Johannesburg Transvaal  (ZA)**

(74) Representative: **Rooney, Paul Blaise et al**
**D.Young & Co. 10 Staple Inn**
**London WC1V 7RD  (GB)**

(54) **A polishing machine for polishing a gemstone.**

㉗  A polishing machine 70 for polishing a gemstone includes a support arrangement 76 movably mountable relative to a polishing means. A holding means 102 for holding the gemstone to be polished is rotatably mounted on the support arrangement 76 and is movable together with the support arrangement 76 to move the gemstone into and out of contact with the polishing means. A drive means 112 is provided for rotatably driving the holding means relative to the support arrangement. The machine 70 includes a control means for controlling operation of the said drive means 112 and thus the rotation of the holding means 102 relative to the support arrangement 76. A monitoring means 26 monitors a polishing rate of the gemstone at each of a plurality of predetermined positions of a revolution of the holding means 102 about the support arrangement 76 and sends data representative of the polishing rate at the said positions of the holding means 102 to the control means, the control means controlling the drive means 112 to position the holding means 102 at that position at which the said optimum polishing rate is achieved.

FIG 1

FIG 2

## Description

### A POLISHING MACHINE FOR POLISHISHING A GEMSTONE

This invention relates to a polishing machine for polishing a gemstone, and to a method of polishing a gemstone.

According to a first aspect of the invention, there is provided a polishing machine for polishing a gemstone, characterised by including,

a support arrangement movably mountable relative to a polishing means;

a holding means for holding the gemstone to be polished, the holding means being rotatably mounted on the support arrangement and being movable together with the support arrangement to move the gemstone into and out of contact with the polishing means;

a drive means for rotatably driving the holding means relative to the support arrangement;

a control means for controlling operation of the said drive means and thus the rotation of the holding means relative to the support arrangement; and

a monitoring means for monitoring a polishing rate of the gemstone at each of a plurality of predetermined positions of a revolution of the holding means about the support arrangement and for sending data representative of the polishing rate at the said positions of the holding means to the control means, the control means being operable to process the data to determine the position of the holding means at which an optimum polishing rate is achieved and to operate the drive means to position the holding means at that position at which the said optimum polishing rate is achieved.

The machine is intended particularly for use in polishing precious gemstones such as diamonds. Those skilled in the art will appreciate that a diamond must be polished along its grain. Each facet of the diamond has a unique grain characteristic, and in order to polish the various facets of the diamond, the best position of the diamond relative to the polishing means to achieve the optimum polishing rate must be found.

The machine may include a height-varying means for adjustably varying the height of the support arrangement and hence the holding means relative to the polishing means.

The support arrangement may be pivotally mounted on a free end of a beam which extends cantilever-fashion from a movable housing, the height-varying means acting on the housing for adjustably varying the height of the support arrangement.

The height-varying means may comprise an electric motor having an eccentric mounted on an output shaft thereof, the eccentric co-operating with a projection extending from the housing, the position at which the projection extends from the housing being adjustable to adjust the degree to which the height-varying means raises and lowers the support arrangement relative to the polising means.

The machine may include a reciprocating means for imparting a reciprocatory motion to the support arrangement and hence the holding means.

The reciprocating means may comprise an electric motor which has a cam-like formation on an output shaft thereof, the cam-like formation co-operating with a pair of spaced follower formations projecting from the housing with the cam-like formation extending between the follower formations.

The drive means may comprise a stepper motor for rotating the holding means in a stepwise manner relative to the support arrangement to provide the said positions at which the monitoring means monitors the polishing rate of the gemstone by the polishing means, the holding means being mounted rotatably fast with, but axially slidable relative to, an output shaft of the support arrangement extending from the stepper motor. For example, the stepper motor may rotate the holding means through 360°, with the polishing rate of the gemstone being sampled at predetermined intervals, eg. every 5°

The holding means may comprise a housing within which a shaft is rotatably mounted, at least one end of the shaft projecting from the housing and a holder for holding the gemstone being mounted rotatably fast with the said end of the shaft.

The machine may include a second drive means for rotatably driving the shaft of the holding means, the second drive means being controllable by the control means.

The second drive means may comprise a stepper motor which drives a worm gear which, in turn, is engageable with a spur gear mounted rotatably fast with the shaft of the holding means, the stepper motor, in use, rotating the shaft in predetermined steps to polish various portions of a surface of the gemstone in a predetermined manner.

As described above, the machine in accordance with the invention is intended for polishing the various facets of a diamond, and the said portions of the gemstone may therefore be the facets of the diamond being polished. Hence, for example, with a diamond which has sixteen facets, the stepper motor will rotate the shaft of the holding means through 22,5° so that, once one facet has been polished, the following facet will be brought into position to be polished by the polishing means.

The shaft may be arranged at an angle relative to the support arrangement. The machine may thus include an adjustment means for adjusting the angle at which the shaft extends relative to the support arrangement, the adjustment means comprising a thimble micrometer.

The holding means may include a bracket which is suspended from the output shaft of the support arrangement via a body.

In one embodiment of the invention, the monitoring means may comprise an inductive transducer for monitoring the movement of the body relative to the support arrangement, the said movement being caused by removal of material from the gemstone under the action of the polishing means.

The transducer may comprise at least one coil which is excitable by a signal of a predetermined frequency for generating lines of magnetic flux which results in eddy-current losses in the body, the magnitude of the losses being dependent on the position of the body relative to the support arrangement.

The transducer may include processing circuitry for processing variations in impedance of the coil as a result of the eddy-current losses to provide an output voltage signal which is directly proportional to the rate at which material is removed from the gemstone by the polishing means. The said output voltage signal may be an analog DC voltage signal which is fed to the control means, the control means including an analog to digital convertor for converting the signal to a digital signal to be processed by a microprocessor of the control means.

The transducer may include two coils, a first coil sensing the movement of the body and the resultant losses with a second coil serving as a compensating coil to balance and cancel the effects of temperature change.

In another embodiment of the invention, the monitoring means may comprise a capacitive transducer having a first plate mounted fast with the body of the holding means to be rotatable therewith and a second plate mounted on the support arrangement parallel to and spaced from the first plate.

The capacitive transducer may be arranged in a Wheatstone bridge arrangement which is set to provide a null output prior to commencing polishing of the gemstone. The capacitive transducer may be responsive to removal of material from the gemstone by the polishing means, the said removal of material causing a change of capacitance of the transducer which results in the Wheatstone bridge becoming unbalanced to generate an output signal which is inversely proportional to the rate at which material is removed from the gemstone, the generated signal being fed to, and processed by, a microprocessor of the control means.

Those skilled in the art will appreciate that any change in the distance between the body and the support arrangement will cause a change in the impedance of the inductive transducer or the capacitive transducer, as the case may be. Hence, any material removed from the gemstone as it is polished will cause the impedance to change. Further, when the gemstone is oriented relative to the polishing means so that it is being polished along its grain, material will be removed more rapidly than will be the case when the gemstone is being polished across, or against the grain. Hence, the rate of change of the impedance will be indicative of the polishing rate of the gemstone.

According to a second aspect of the invention, there is provided a method of polishing a gemstone, characterised by mounting the gemstone in a holding means which is rotatable about a substantially vertical axis;
bringing a portion of a surface of the gemstone into contact with the polishing means;
rotating the holding means through a revolution about the said vertical axis;
monitoring the rate at which material is removed from the said portion of the surface of the gemstone at predetermined positions of the revolution of the holding means and generating an electrical output signal representative of the rate of removal of material from the said portion of the surface of the gemstone at each position;
processing the signals so generated to ascertain at which position of the revolution of the holding means the optimum rate of removal of material from the portion of the surface of the gemstone is achieved; and
returning the holding means to the said position at which the optimum rate of removal of material from the gemstone is achieved and commencing polishing of that portion of the surface of the gemstone.

The method may include mounting the gemstone in a holder mounted at an end of a rotatable shaft arranged at an angle relative to the said vertical axis about which the holding means is rotatable, and adjusting the angle of the shaft relative to the vertical axis to align the gemstone relative to the polishing means.

The method may thus include, after sampling and polishing the said portion of the surface of the gemstone, lifting the gemstone off the polishing means, rotating the rotatable shaft through a predetermined arc to bring another portion of the surface into position to be polished, bringing the said next portion of the surface of the gemstone into contact with the polishing means, and repeating the sampling and polishing process on the said next portion of the surface of the gemstone.

The holding means may be suspended from a support arrangement via a body which is axially displaceable along the said vertical axis relative to the support arrangement, and the method may then include monitoring the rate of removal of material from the portion of the surface of the gemstone by monitoring the axial displacement of the holding means relative to the support arrangement, the axial displacement of the holding means being proportional to the rate of removal of the material.

In one embodiment of the invention, the method may include monitoring the axial displacement of the holding means relative to the support arrangement by means of an inductive transducer.

The method may thus include causing lines of magnetic flux to be generated in the body of the holding means to cause eddy-current losses in the body, and monitoring variations in the impedance of the transducer as a result of the losses to produce the electrical output signal, the signal being an analog signal which is directly proportional to the rate of removal of material from the portion of the surface of the gemstone being polished.

The method may include converting the analog signal to a digital signal for processing by a control means which controls the polishing of the gemstone.

In another embodiment of the invention, the method may include monitoring the axial displacement of the holding means relative to the support arrangement by means of a capacitive transducer.

The capacitive transducer may comprise a pair of spaced apart parallel plates, a first plate being mounted fast with the support arrangement and a second plate being mounted fast with the body of the holding means to be rotatable therewith, and the method may include monitoring variations in the capacitance of the transducer due to variations in the spacing between the plates, the spacing between the plates being variable in response to the removal of material from the portion of the surface of the gemstone.

The method may include connecting the plates in an arm of a Wheatstone bridge arrangement and initially balancing the Wheatstone bridge arrangement to provide a null output prior to commencing polishing of the portion of the surface of the gemstone, the removal of material from the portion of the gemstone causing the Wheatstone bridge arrangement to become unbalanced to generate the said electrical output signal which is inversely proportional to the rate of removal of material from the portion of the surface of the gemstone, the output signal being an analog signal.

The method may include converting the analog signal to a digital signal for processing by a control means which controls the polishing of the gemstone.

The invention is now described by way of example with reference to the accompanying diagrammatic drawings.

In the drawings,

Figure 1 shows a partly sectioned side view of a polishing machine, in accordance with a first aspect of the invention, for polishing gemstones;

Figure 2 shows a plan view of a polishing machine, in accordance with a second aspect of the invention, for polishing gemstones;

Figure 3 shows a side view of the machine of Figure 2 with a portion thereof omitted for the sake of clarity;

Figures 4A to 4D show a circuit diagram of control circuitry of the machine of Figures 2 and 3;

Figure 5 shows a block diagram illustrating the relationship between the circuits illustrated in Figures 4A to 4D;

Figure 6 shows a schematic block diagram of a transducer circuit of the machine of Figures 2 and 3; and

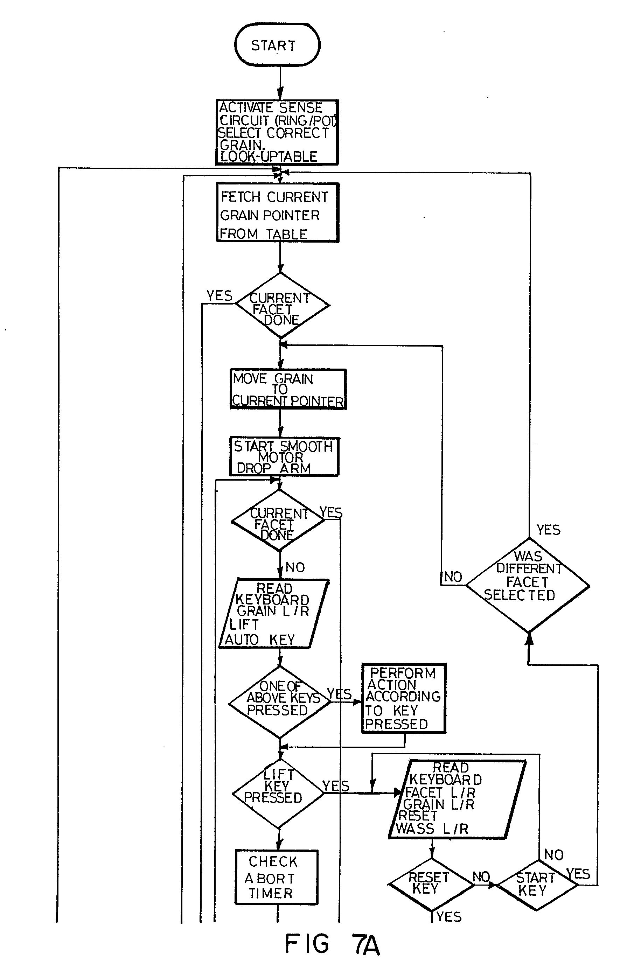

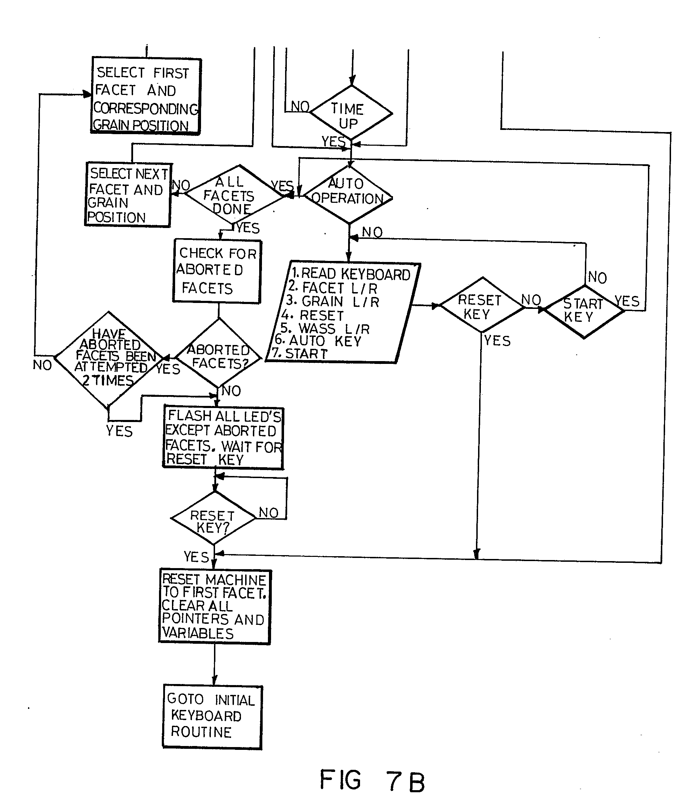

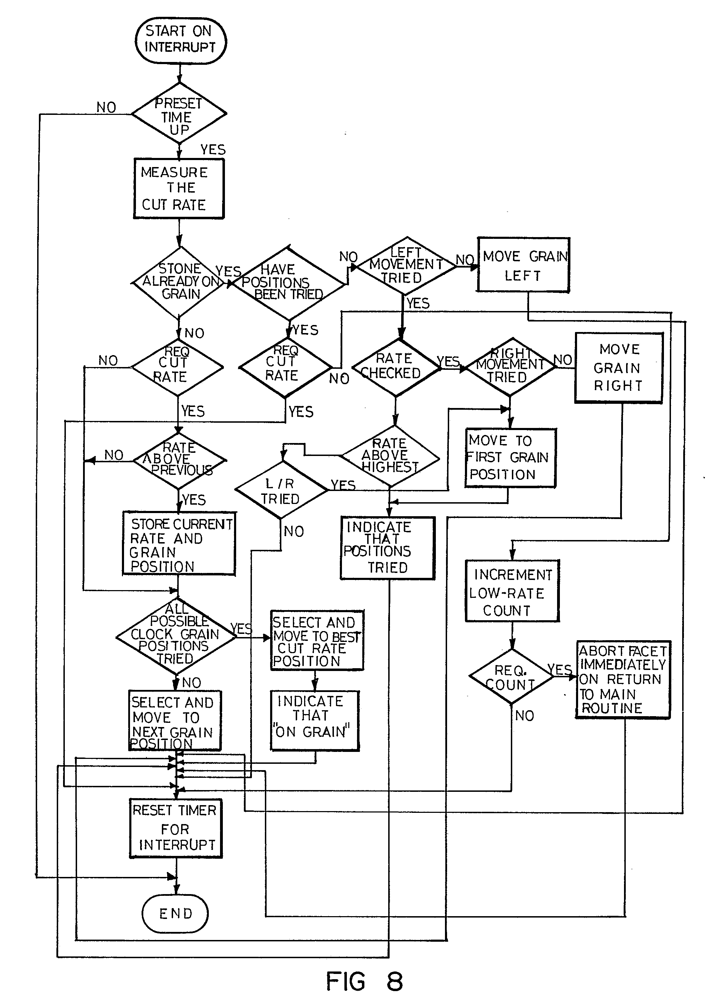

Figures 7A and 7B and Figure 8 show flow charts of controlling software of the machine of Figures 2 and 3.

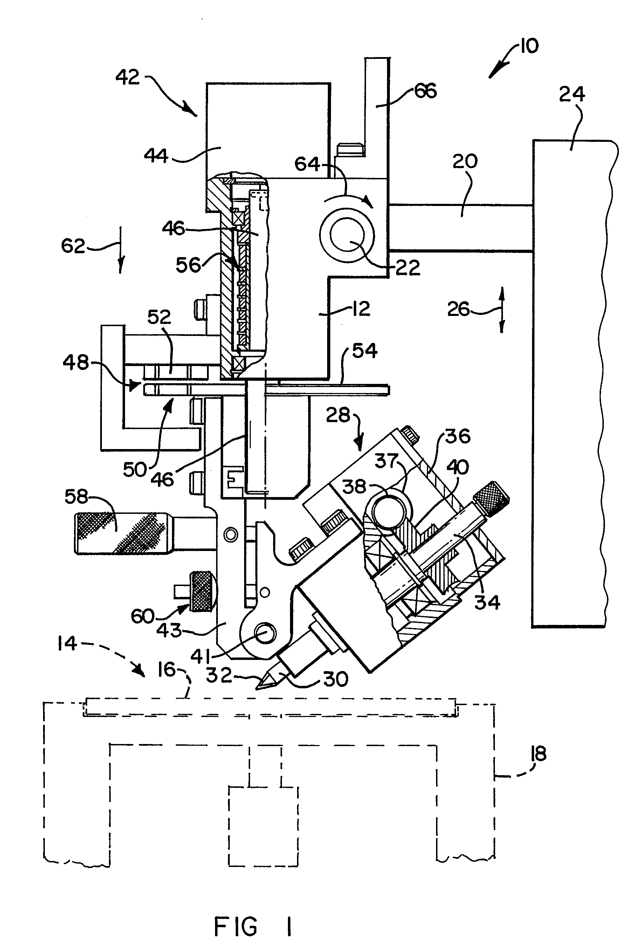

Referring firstly to Figure 1 of the drawings, a polishing machine in accordance with a first aspect of the invention for polishing a gemstone such as a diamond is designated generally by the reference numeral 10. The polishing machine 10 includes a support arrangement 12 which, in use, is mounted above a polishing means 14 comprising a rotatable scaive 16 mounted on a bench 18.

The support arrangement 12 is pivotally mounted on a moveable arm 20 via a pivot pin 22. The arm 20 projects from a housing 24 containing a drive means (not shown) for moving the arm 20 in the direction of arrows 26. The housing 24 also contains a reciprocating means (also not shown) for imparting a reciprocating motion to the arm 20 and hence the support arrangement 12.

A holding means 28 is rotatably mounted on the support arrangement 12. The holding means 28 comprises a holder 30 in which a diamond 32 is receivable. The holder 30 is mounted on the end of a shaft 34 which is rotatably mounted in a housing 36. The machine 10 includes a drive means in the form of an electric motor 37 rotatably driving the shaft 34 as will be discussed in greater detail below. A worm gear 38 is driven by the electric motor 37. The worm gear 38 co-operates with a spur gear 40 mounted rotatably fast with the shaft 34.

The housing 36 is pivotally mounted via a pivot pin 41 on a bracket 43.

The polishing machine 10 further includes a drive means 42 for rotatably driving the holding means 28 relative to the support arrangement 12. The drive means 42 comprises a stepper motor 44 driving an output shaft 46. The bracket 43 of the holding means 28 is mounted rotatably fast with the output shaft 46 of the drive means 42.

The machine 10 further includes a monitoring means 48 for monitoring the polishing rate of the diamond 32 by the scaive 16. The monitoring means 48 is connected to a control means (not shown) for controlling the operation of the machine 10.

The monitoring means 48 comprises a capacitive transducer 50 which includes a first plate 52 mounted fast with the support arrangement 12 and a second plate 54 mounted on the bracket 43 of the holding means 28. Thus, it will be appreciated that the plate 54 is rotatable relative to the plate 52. The capacitive transducer 50 is connected in a Wheatstone bridge arrangement of the control means. The capacitive transducer 50, also controls the operation of the stepper motor 44 via the control means.

A connection means comprising a slip ring arrangement 56 is mounted on the output shaft 46 of the drive means 42 for enabling electrical signals to be sent to the motor of the holding means 28.

The shaft 34 of the holding means 28 is arranged at an angle relative to the output shaft 46 of the drive means 42. The angle of the shaft 34 relative to the output shaft 46 is adjustable by means of an adjustment means in the form of a thimble micrometer 58. A lock nut arrangement 60 is provided for enabling the shaft 34 to be locked in position relative to the output shaft 46. It will be appreciated that by adjusting the angle of the shaft 34 relative to the shaft 46, the angle of the diamond 32 relative to the scaive 16 is also adjusted.

In use, to set up the machine 10, the Wheatstone bridge arrangement of the monitoring means 48 is balanced so that there is a zero output from the bridge arrangement. The capacitive transducer 50 is also used to level the machine 10 relative to the polishing means 14.

The support arrangement 12 is lowered onto the polishing means 14 in the direction of arrow 62 so that the diamond 32 in the holder 30 is brought into contact with the rotating scaive 16. The holding means 28 is rotated through 360° and the polishing rate of the diamond by the scaive 16 is sampled at predetermined intervals by the capacitive transducer 50. It will be appreciated that with the provision of a stepper motor 44, the holding means 28 is rotated in a stepwise manner. For example, the polishing rate is sampled every 5°.

Those skilled in the art will appreciate that each facet of a diamond has a unique grain characteristic. To achieve the optimum polishing rate of the diamond 32 the diamond must be polished along the grain of the facet, ie. the "softest" portion of the diamond. Once the polishing rate of the diamond 32 has been sampled through a revolution of the holding means 28 about the shaft 46, the holding means 28 returns to the position at which the optimum polishing rate has been monitored by the monitoring means 48 and the machine commences polishing. To effect efficient polishing of the diamond 32, the arm 20 and the support arrangement 12, including the holder 30, is reciprocated by the reciprocating means, thereby causing the diamond 32 to oscillate back and forth radially across the surface of the scaive 16.

As material is removed from the diamond 32, the distance between the plates 52 and 54 of the capacitive transducer 50 will change thereby varying the capacitance of the transducer 50, and hence its impedance. This causes the Wheatstone bridge arrangement to become unbalanced thereby generating an output signal. The output signal is an analog signal which is inversely proportional to the polishing rate of the diamond 32. This output signal is fed to a microprocessor of the control means. The microprocessor controls the stepper motor 44 to orientate the diamond 32 to its correct grain position, and at the same time automatically adjusts the pressure on the diamond 32.

When polishing of the particular facet of the diamond 32 has been completed, the holder 30 comes into contact with the scaive 16 causing a signal to be sent via the slip ring arrangement 56 to the microprocessor of the control means. The microprocessor then delivers a command to the drive means of the arm 20 thereby raising the support arrangement 12 so that the diamond 32 is clear of the scaive 16.

A signal is then sent to the motor 37 of the holding means 28 which rotates the diamond 32 so that the next facet can be polished. Thus, for example, with a diamond having sixteen facets, the motor of the holding means 28 will rotate the shaft 34 through 22,5° so that the next facet of the diamond 32 can be polished. The support arrangement 12 is again lowered in the direction of arrow 62 so that the said next facet of the diamond 32 is brought into contact with the scaive 16. The sampling and polishing process is then repeated.

If it is desired to inspect the diamond 32 at any stage of the polishing process, the support arrangement 12 is lifted by the arm 20. The support arrangement 12 is then pivoted about the pivot pin 22 in the direction of arrow 64 using a handle 66 mounted on top of the support arrangement 12.

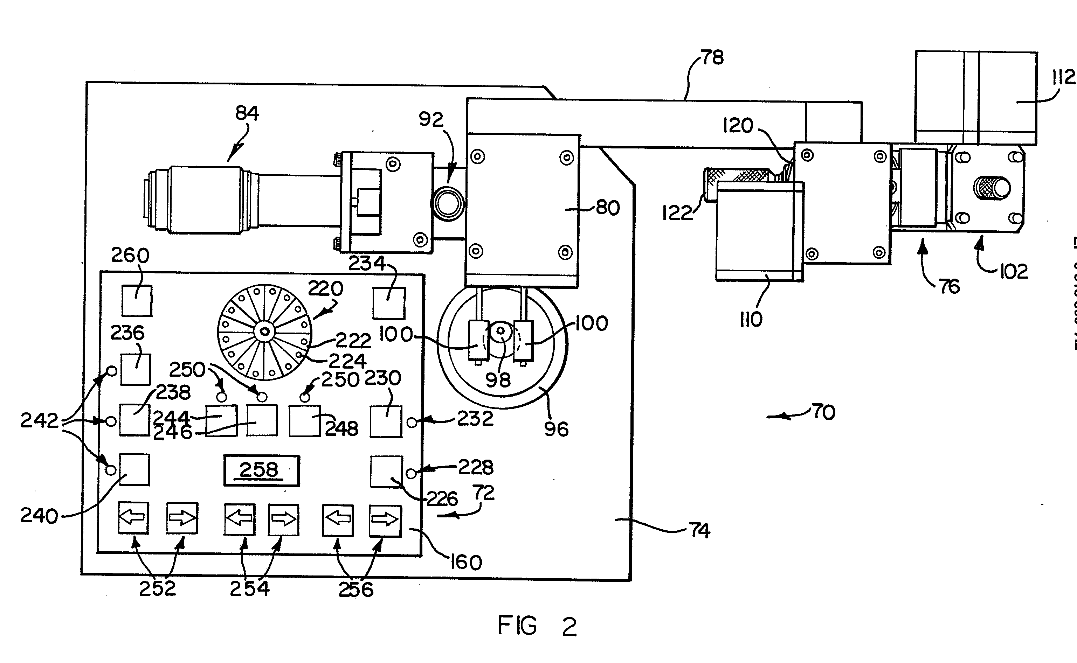

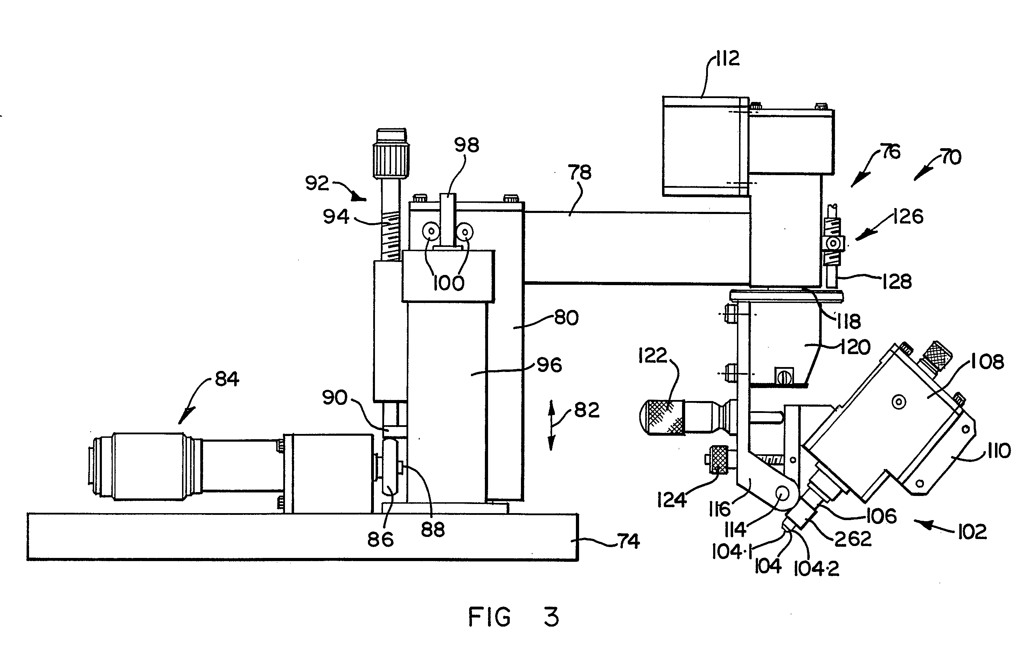

Referring now to Figures 2 and 3 of the drawings, a polishing machine in accordance with a second aspect of the invention is illustrated and is designated generally by the reference numeral 70. In Figure 3 of the drawings, a control box 72 of the machine, which will be described in greater detail below, is omitted for the sake of clarity.

In this embodiment of the invention, the machine 70 comprises a base plate 74 mountable on a bench top (not shown) carrying the rotatable scaive (also not shown). Although the bench top and scaive are not illustrated, it will be appreciated that they are the same as the scaive 16 and bench 18 illustrated in Figure 1.

The machine 70 includes a support arrangement 76 pivotally mounted at a free end of a cantilevered arm or beam 78. The support arrangement 76 is pivotal on the beam 78 in a substantially vertical plane. An opposed end of the arm 78 is mounted on a housing 80. The housing 80 is substantially vertically displaceable relative to the base plate 74 in the direction of arrows 82.

A drive means comprising a DC motor 84 is mounted on the base plate 74. An eccentric 86 is mounted on an output shaft 88 of the DC motor 84. A projection 90 extends from the housing 80 and abuts against a periphery of the eccentric 86. Thus, by activating the motor 84 the housing 80 can be raised or lowered, as desired. The degree to which the housing 80 can be raised or lowered is adjustable by an adjustment means 92 comprising a threaded rod 94, a free end of the threaded rod 94 abutting against the projection 90. Those skilled in the art will appreciate that the degree to which the housing 80 and therefore the arm 78 and the support arrangement 76 is raised and lowered is dependent on the size of the diamond (not shown) being polished.

To effect reciprocatory motion of the diamond back and forth radially across the scaive, a second drive means in the form of a DC motor 96 is mounted on the base plate 74.

A cam-like formation 98 projects from the output shaft of the motor 96 and is sandwiched between a pair of follower formations 100 extending from the housing 80. As the DC motor 96 rotates, in use, the housing 80 is caused to reciprocate thereby causing reciprocatory motion to be imparted to the support arrangement 76.

A holding means 102 is rotatably mounted on the support arrangement 76. The holding means 102 comprises a holder 104 in which a diamond to be polished is receivable. The holder 104 is mounted fast with the end of a shaft 106, the shaft 106 being rotatably mounted in the housing 108. A drive means in the form of a stepper motor 110 is mounted on the housing. The stepper motor 110 drives the shaft 106 in a step-wise manner by means of a worm gear which engages a spur gear mounted rotatably fast with the shaft 106.

A further drive means comprising a stepper motor 112 is also mounted on the support arrangement 76 for rotatably driving the holding means 102 relative to the support arrangement 76. In this regard, the housing 108 together with its associated output shaft 106 and stepper motor 110 is pivotally mounted via a pivot pin 114 on a bracket 116. The bracket 116 is suspended on a rotatable output shaft 118 of the support arrangement 76, via a body (hereinafter referred to as the "target") 120. The target 120 is mounted rotatably fast with the output shaft 118 of the support arrangement 76. The stepper motor 112 drives the output shaft 118 via a worm gear and spur gear assembly located within the support arrangement 76.

The shaft 106 of the holding means 102 is arranged at an angle relative to the shaft 118. The angle of the shaft 106 relative to the shaft 118 is adjustable by means of an adjustment means in the form of a thimble micrometer 122. A lock nut arrangement 124 is provided for enabling the shaft 106 to be locked in position relative to the output shaft 118. It will be appreciated that, by adjusting the angle of the shaft 106 relative to the shaft 118, the angle of the diamond relative to the scaive is also adjusted.

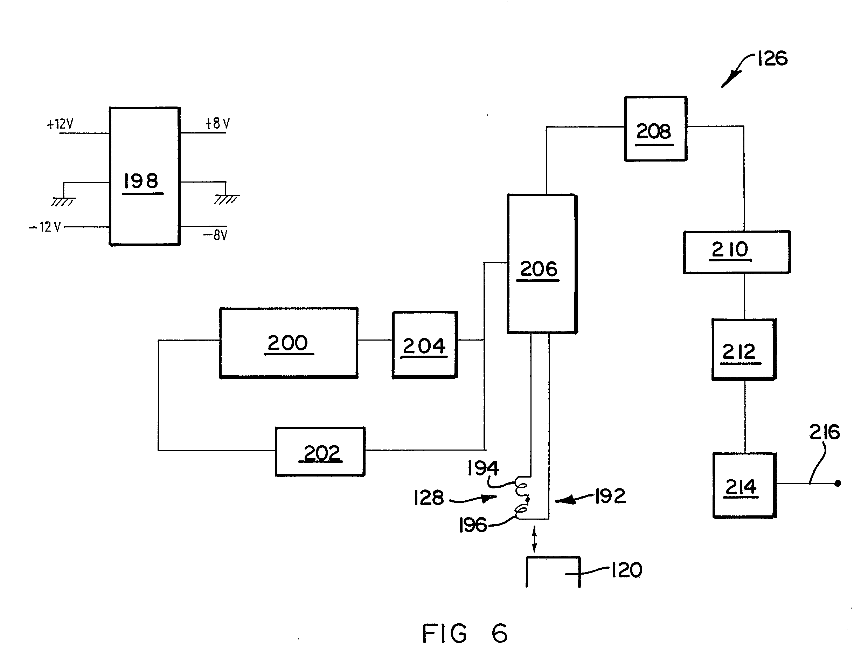

A monitoring means 126 for monitoring the polishing rate of the diamond by the scaive is mounted on the support arrangement 76. The monitoring means 126 is connected to a control means located in the control box 72 for controlling the operation of the machine 70. The monitoring means 126 comprises an inductive transducer 128 which will be discussed in greater detail below with reference to Figure 6 of the drawings. The inductive transducer monitors the movement of the target 120 relative to the support arrangement 76. Those skilled in the art will appreciate that as material is removed from a facet of the diamond being polished, the target 120 will move relative to the support arrangement 76 and this movement will be monitored by the monitoring means 126.

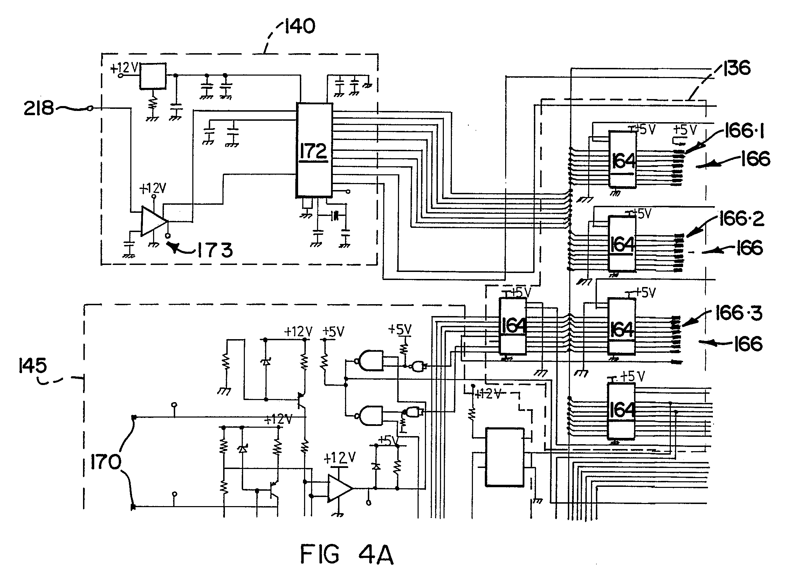

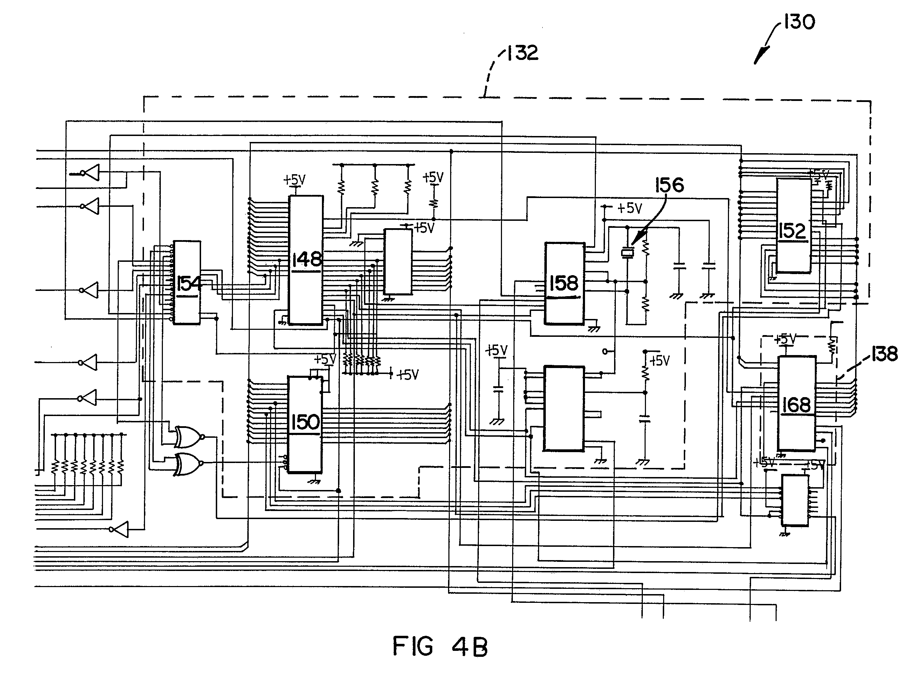

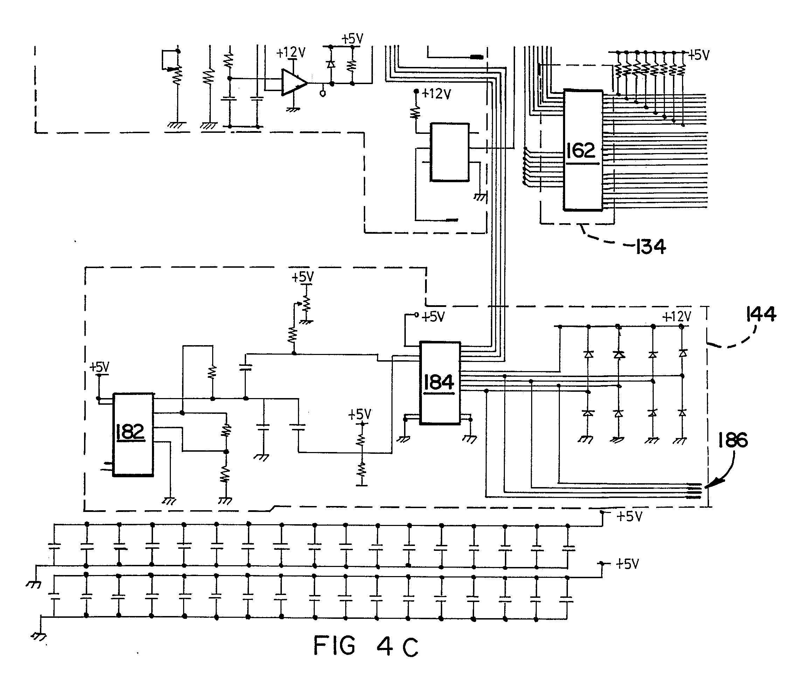

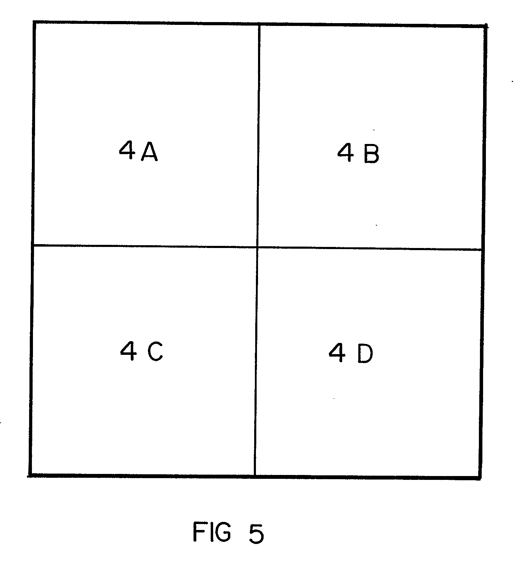

Referring now to Figures 4A to 4D and Figure 5 of the drawings, the circuitry of the control means of the machine 70 is illustrated and is designated generally by the reference numeral 130. The control circuitry 130 effectively comprises nine modules, viz a digital processor module 132, a keyboard and stepper motor interface module 134, a digital ram port module 136, a timer interrupt controller module 138, an analog to digital convertor module 140, a stepper motor logic and driver module 142, a DC motor logic and driver module 144, a contact sense circuit module 145 and a host communication port module 146.

Referring firstly to the digital processor module 132, this module 132 comprises a microprocessor 148, an erasable programmable read only memory (EPROM) 150, and a random access memory (RAM) 152. The RAM 152 may conveniently be a CMOS RAM. Further, this module 132 comprise an address decoder 154. The module 132 further comprises a crystal oscillator 156 for providing clocking pulses via a hex Schmitt trigger 158 to the circuit 130.

The module 132 effectively controls the basic functions of the machine 70 and receives and processes data from external inputs. It also controls the operation of the DC motors 84 and 96 and the stepper motors 110 and 112. Further, the module 132 controls and interprets data received from the monitoring means 126 via the analog to digital convertor module 140. It also reads data from a keyboard 160 of the control box 72 and controls light emitting diodes on the keyboard 160. Further, this module 132 can send status information via the module 146 to a host computer.

Referring now to the keyboard and stepper motor interface module 134, this module comprises a programmable peripheral interface adaptor 162 for providing a logic interface between the keyboard 160 and the stepper motor logic and driver module 142.

The digital ram port module 136 comprises five TTL latches 164 for providing eight bit latched memory mapped I/O ports for direct processor interface of the keyboard 160, the DC motor logic and driver module 144 and the contact sense circuit module 145. The latches 164 include connectors 166 for connection to LED'S on the keyboard 160.

The timer interrupt controller module 138 comprises a counter timer controller 168. This module 138 provides interrupts to the processor module 132 and also provides timing logic for delay routine and abort timers. It also functions to sense contact of the holder 104 with the scaive to permit immediate reaction of the contact of the holder 104 with the scaive by terminating polishing of the diamond and also reducing damage to the scaive and the holder 104. The contact of the holder 104 with the scaive is sensed by sensors 170 in the contact sense circuit module 145.

The analog to digital convertor module 140 comprises a fast 12 bit analog to digital convertor 172. This module 140 converts a varying analog signal output by the monitoring means 126 into a corresponding 12 bit digital word for use by the processor module 132. The module 140 also contains a sample and hold circuit 173 to provide stable analog input signals to the convertor 172. The convertor 172 has direct interface capabilities onto the processor module 132. The processor module 132 together with a reading from the analog to digital convertor module 140 controls the beam 78 and hence ensures a constant pressure on the diamond being polished.

The stepper motor logic and driver module 142 comprises two identical circuits 172, one for each stepper motor 110, 112. Each circuit 174 comprises a stepper motor controller 176, the output of which is connected to a quad Darlington array integrated circuit 178. The relevant stepper motor 110 or 112 is connected to its associated circuit 174 via a connector 180.

The DC motor logic and driver module 144 provides bidirectional control for both the motors 84 and 96. The module includes "brake stopping" capabilities which enables accurate control of the DC motors 84 and 96 and individually variable speed inputs. The module 144 comprises an audio amplifier 182 which is used to generate a saw tooth waveform. An output from the audio amplifier 182 is connected to a push-pull four channel driver 184 for driving the DC motors 84, 96. The DC motors 84,96 are connected to the driver 184 via connectors 186.

The contact sense circuit module 145 provides clean response pulses which are fed into the counter timer controller 168 of the timer interrupt controller module 138. These pulses are interpreted via an interrupt from the counter timer controller 168 by the processor module 132 which activates the DC motor 84 thereby terminating further polishing of the facet of the diamond being polished. Variable response speed is provided to ensure the correct lifting action of the beam 78 by the motor 84. The holder 104 of the holding means 102 comprises a pot 104.1 and a ring 104.2. Thus, the module 145 comprises two sensors 170, one for sensing contact between the pot 104.1 and the scaive, and the other for sensing contact between the ring 104.2 and the scaive.

Referring finally to the host communication port module 146, this module comprises two D-type latches 188 which are connected to a twenty way connector 190. This module 146 enables the machine 70 to be connected to a "host" computer for monitoring, inter alia, the performance of the machine to ensure constant operation of the machine, for monitoring operation and fault status of the machine and coupling the machine to a wages and salaries department to aid in wage calculations for an operator of the machine. Further, by means of this module 146 and the connection to the "host" computer, daily, weekly, or monthly outputs can be obtained to determine productivity and efficiency of a plurality of the machines 70 and their operators.

Referring now to Figure 6 of the drawings, a schematic block diagram of a circuit of the monitoring means 126 is shown. The transducer 128 comprises a dual coil sensor 192 comprising a first coil 194 and a second coil 196. The sensor 192 measures movement of the target 120 relative to the transducer 128.

The monitoring means 126 comprises a dual track voltage regulator 198. The regulator 198 has a +8V and a -8V output serving as a voltage supply to all the components of the circuit of the monitoring means 126.

The monitoring means circuit comprises an oscillator 200 connected in series with an automatic gain control circuit 202 and a buffer driver 204. The oscillator oscillates at a predetermined frequency which is in the region of one MHz. The output signal from the oscillator 200 is fed via a differential phase detector 206 to the coils 194 and 196 of the sensor 192. An output signal from the sensor 192 is fed back via the differential phase detector 206 through a buffer driver 208, to a logarithmic amplifier 210 where a log signal is converted to a linear signal and is amplified, through a final buffer amplifier 212 and a sample and hold voltage follower 214 to an analog output terminal 216. The analog output terminal 216 is connected to an input terminal 218 of the analog to digital convertor module 140 (Figure 4A) of the control circuitry 130.

The monitoring means 126 operates on the eddy-current loss principle. The coils 194 and 196 of the sensor 192 are activated by the 1 MHz signal from the oscillator 200. Magnetic flux lines emanating from the coils 194 and 196 at a 1 MHz rate pass into the target 120 and produce eddy-currents. As the target 120 moves closer to the sensor 192, more eddy-current are generated and the losses within the sensor 192 become greater. Conversely, as the target 120 moves away from the sensor 192 the losses become less.

These impedance variations are converted to a DC voltage via the phase detector 206 which is directly proportional to variations in the distance between the target 120 and the sensor 192.

The first coil 194 is an active element which senses the movement of the target 120 and the second coil 196 serves as a compensating coil to balance and cancel the effects of temperature change.

Referring once again to Figure 2 reference is made to the control box 72 of the machine 70. All the electronic circuitry including the circuit 130 is housed within the control box 72.

The keyboard 160 comprises a display element in the form of a circular display 220 subdivided into a plurality of segments 222, the segments being representative of facets of a diamond. In the embodiment of the invention illustrated, the display 220 is divided into sixteen segments 222. A light emitting diode (LED) 224 is arranged in each segment 222. The LED'S 224 are connected to connectors 166.1 and 166.2 of the digital ram port module 136 of the circuit 130.

Thus, the LED'S 224 will be energised as the various facets of the diamond are polished. If a diamond having eight facets is being polished, two adjacent LED's 224 will be energised simultaneously in respect of each facet. Once energised, the LED'S 224 remain on so that the operator can monitor the progress of the polishing of the facets. The LED's 224 will be de-energised when the polishing process has been completed or when the machine is reset.

The keyboard 160 comprises a plurality of buttons and may be in the form of a membrane-type keyboard. Thus, the keyboard 160 includes a start button 226 with its associated LED 228, and an "auto" button 230 with its associated LED 232. A button 234 is provided for raising and lowering the housing 80 via the DC motor 84.

A set of buttons 236, 238 and 240 each with an associated LED 242 is provided and the button 236, 238 or 240 are operable in dependence on the number of facets of the diamond to be polished. Thus, for example, for a sixteen facet diamond button 236 will be operated, and for an eight facet diamond, button 240 will be operated. If the lift circuit is to be activated on the pot 104.1 of the holder 104 making contact with the scaive, either buttons 236 or 240 as described above will be operated, depending on whether a diamond having sixteen facets or eight facets respectively is to be polished. However, if the lift circuit is to be activated on contact of the ring 104.2 of the holder 104 with the scaive, and for a diamond having eight facets, button 238 will be operated.

The keyboard 160 further comprises a "seek on" button 244, a "seek off" button 246 and a "level" button 248. Each button 244, 246 and 248 has an LED 250 associated therewith. The LED's 228, 232, 242 and 250 are connected to the connectors 166.3 of the digital ram port module 136.

The keyboard 160 further comprises a pair of buttons 252 for rotating the shaft 106 to bring a predetermined facet into contact with the scaive. A further pair of buttons 254 is provided for rotating the holding means about the shaft 118 for varying the orientation of the grain of a predetermined facet of the diamond relative to the scaive.

Yet a further pair of buttons, the "wass" buttons 256, is provided for rotating the shaft 106 through fractions of a degree for bringing various portions of a predetermined facet of the diamond into contact with the scaive.

A display 258 is provided on the keyboard 160. The display 258 is electrically connected to terminal 216 of the monitoring means circuit. The display is a digital display and provides visual indication of the rate of removal of material from the facet of the diamond being polished. This enables an operator of the machine 70 to monitor the rate of removal of material visually and to take appropriate action when necessary, eg. by adjusting the orientation of the facet of the diamond relative to the scaive to improve the rate of removal of material.

The display 258 can also be used to calibrate the transducer 128 when the machine 70 is initially installed. Further, the display 258 aids in levelling the machine 70 relative to the scaive, in use.

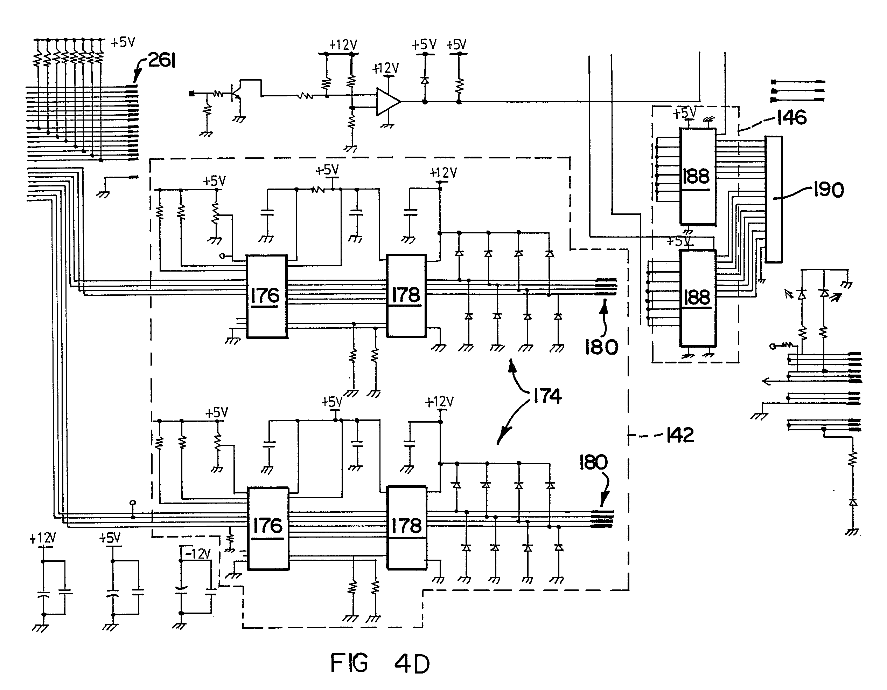

Finally, a reset button 260 is provided for resetting the machine 70. All the buttons referred to above are connected to a connector 261 (Figure 4D) of the peripheral interface adaptor 162 of the keyboard and stepper motor interface module 134 of the control circuitry 130.

In use, the support arrangement is pivoted through 180° in the vertical plane relative to the beam 78 so that a diamond can be placed in the holder 104 of the shaft 106 in the holding means 102. The support arrangement 76 is again pivoted through 180° in its said vertical plane so that the holder is again above the scaive.

Assuming a diamond having sixteen facets is to be polished, button 236 is operated and the start button 226 is operated. If the machine 70 is to polish all facets of the diamond automatically, the button 230 is also operated. The DC motor 84 is activated to lower the diamond into engagement with the rotating scaive and the diamond is caused to reciprocate radially back and forth across the scaive by activating the DC motor 96.

In "auto" operation, the holding means 102 is rotated through 360° and the polishing rate of the diamond in the holder 104 is sampled at predetermined intervals by the inductive transducer 128. The stepper motor 112 rotates the holding means 102 in a stepwise manner, for example, the polishing rate is sampled at 5° intervals. The facet of the diamond being polished is indicated by the LED 224 of the relevant segment 222 of the display 220. Once the polishing rate has been sampled through a complete revolution of the holding means 102 by the inductive transducer 128 and processed by the circuit 130, the stepper motor 112, under the control of the circuit 130 returns the holding means 102 to the position at which the optimum polishing rate of that particular facet is achieved and polishing of the facet of the diamond commences.

As material is removed from the diamond under the action of the scaive, the target 120 moves relative to the inductive transducer 128. As the target 120 moves away from the transducer 128 the eddy-current losses are reduced and these impedance variations are sensed by the coils 194 and 196 of the sensor 192 and are converted to a DC voltage by the phase detector 206. The DC voltage is processed and is output at the terminal 216. The DC voltage signal is then fed to the analog to digital convertor module 140 whereafter it is processed by the digital processor module 132. As previously described, the DC voltage signal output at the terminal 216 is directly proportional to the distance between the target 120 and the inductive transducer 128.

The analog to digital convertor module 140 at the same time controls the pressure on the diamond via the beam 78 and ensures constant pressure on the diamond being polished.

When the polishing of the particular facet has been completed, the pot 104.1 or the ring 104.2, as the case may be, will come into contact with the scaive and this contact will be sensed by the relevant contact sensor 170 of the contact sense circuit module 145 and an appropriate signal is sent by the processor module 132 to the DC motor 84 thereby causing the housing 80 and thus the beam 78 and the support arrangement 76 to lift the holding means 102 clear of the scaive under the action of the eccentric 86.

The digital processor module 82 then causes a signal to be sent to the stepper motor 110 and the shaft 106 is rotated through a predetermined amount to orientate the next facet of the diamond 104 for polishing. In the case of a diamond having sixteen facets the shaft 106 will be rotated through 22.5°. A signal is then sent by the processor module to the DC motor 84 thereby causing the housing 80 and therefore the beam 78 and the support arrangement 76 to be lowered to bring the said next facet of the diamond into contact with the scaive. The sampling and polishing process is then repeated.

Once all the facets of the diamond have been polished, a final signal is sent to the DC motor 84 to lift the housing 80 and thereby the holding means 102 clear of the scaive and the diamond can then be removed from the holder 104.

It will be appreciated that the machine 70 could also be manually operated and the facet to be polished would then be selected using the buttons 252 and the orientation of that facet relative to the scaive would be selected by the buttons 254. By using the "wass" buttons 256, the facet being polished can be more accurately aligned relative to the scaive.

It is an advantage of the invention that the entire polishing process is conducted automatically without the need for skilled operatives. Further, the machine 10, 70 can be levelled and set for use rapidly using the capacitive transducer 50 or the inductive transducer 128, as the case may be.

**Claims**

1. A polishing machine for polishing a gemstone, characterised by including,

a support arrangement (12, 76) movably mountable relative to a polishing means (14);

a holding means (28, 102) for holding the gemstone to be polished, the holding means (28, 102) being rotatably mounted on the support arrangement (12, 76) and being movable together with the support arrangement to move the gemstone into and out of contact with the polishing means (14);

a drive means (42, 112) for rotatably driving the holding means (28, 102) relative to the support arrangement (12, 76);

a control means for controlling the operation of the said drive means (42, 112) and thus rotation of the holding means (28, 102) relative to the support arrangement (12, 76); and

a monitoring means (48, 126) for monitoring a polishing rate of the gemstone at each of a plurality of predetermined positions of a revolution of the holding means (28, 102) about the support arrangement and for sending data representative of the polishing rate at the said positions of the holding means (28, 102) to the control means, the control means being operable to process the data to determine the position of the holding means (28, 102) at which an optimum polishing rate is achieved and to operate the drive means (42, 112) to position the holding means (28, 102) at that position at which the said optimum polishing rate is achieved.

2. A machine as claimed in Claim 1, which includes a height-varying means for adjustably varying the height of the support arrangement (12, 76) and hence the holding means (28, 102) relative to the polishing means.

3. A machine as claimed in Claim 2, in which the support arrangement (12, 76) is pivotally mounted on a free end of a beam (20, 78) which extends cantilever-fashion from a movable housing (24, 80), the height-varying means acting on the housing (24, 80) for adjustably varying the height of the support arrangement (12, 76).

4. A machine as claimed in Claim 3, in which the height-varying means comprises an electric motor (84) having an eccentric (86) mounted on an output shaft (88) thereof, the eccentric (86) co-operating with a projection (90) extending from the housing (80), the position at which the projection extends from the housing being adjustable to adjust the degree to which the height-varying means raises and lowers the support arrangement (76) relative to the polishing means.

5. A machine as claimed in Claim 3 or Claim 4, which includes a reciprocating means for imparting a reciprocatory motion to the support arrangement (76) and hence the holding means.

6. A machine as claimed in Claim 5, in which the reciprocating means comprises an electric motor (96) which has a cam-like formation (98) on an output shaft thereof, the cam-like formation (98) co-operating with a pair of spaced follower formations (100) projecting from the housing (80) with the cam-like formation (98) extending between the follower formations (100).

7. A machine as claimed in any one of the preceding claims, in which the drive means comprises a stepper motor (44, 112) for rotating the holding means (28, 102) in a stepwise manner relative to the support arrangement to provide the said positions at which the monitoring means (38, 126) monitors the polishing rate of the gemstone by the polishing means, the holding means (28, 102) being mounted rotatably fast with, but axially slidable relative to, the output shaft of the support arrangement extending from the stepper motor (44, 112)

8. A machine as claimed in any one of the preceding claims, in which the holding means (28, 102) comprises a housing (108) within which a shaft (106) is rotatably mounted, at least one end of the shaft projecting from the housing (108) and a holder (104) for holding the gemstone being mounted rotatably fast with the said end of the shaft (106).

9. A machine as claimed in Claim 8, which includes a second drive means for rotatably driving the shaft (106) of the holding means, the second drive means being controllable by the control means.

10. A machine as claimed in Claim 9, in which the second drive means comprises a stepper motor (110) which drives a worm gear which, in turn, is engageable with a spur gear mounted rotatably fast with the shaft (106) of the holding means, the stepper motor (110), in use, rotating the shaft (106) in predetermined steps to polish various portions of a surface of the gemstone in a predetermined manner.

11. A machine as claimed in any one of Claims 8 to 10, in which the shaft (106) is arranged at an angle relative to the support arrangement.

12. A machine as claimed in Claim 11, which includes an adjustment means for adjusting the angle at which the shaft (106) extends relative to the support arrangement, the adjustment means comprising a thimble micrometer (122).

13. A machine as claimed in any one of or Claims 7 to 12, in which the holding means includes a bracket which is suspended from the output shaft of the support arrangement via a body.

14. A machine as claimed in Claim 13, in which the monitoring means(126) comprises an inductive transducer (128) for monitoring the movement of the body relative to the support arrangement, the said movement being caused by removal of material from the gemstone under the action of the polishing means.

15. A machine as claimed in Claim 14, in which the transducer (128) comprises at least one coil which is excitable by a signal of a predetermined frequency for generating lines of magnetic flux which results in eddy-current losses in the body, the magnitude of the losses being dependent on the position of the body relative to the support arrangement.

16. A machine as claimed in Claim 15, in which the transducer (128) includes processing circuitry for processing variations in impedence of the coil as a result of the eddy-current losses to provide an output voltage signal which is directly proportional to the rate at which material is removed from the gemstone by the polishing means.

17. A machine as claimed in Claim 16, in which the said output voltage signal is an analog DC voltage signal which is fed to the control means, the control means including an analog to digital convertor for converting the signal to a digital signal to be processed by a microprocessor of the control means.

18. A machine as claimed in any one of Claims 15 to 17, in which the transducer (128) includes two coils (194, 196), a first coil sensing the movement of the body and the resultant losses with a second coil serving as a compensating coil to balance and cancel the effects of temperature change.

19. A machine as claimed in any one of Claims 1 to 13, in which the monitoring means (48) comprises a capacitive transducer (50) having a first plate (52) mounted fast with the body of the holding means to be rotatable therewith and a second plate (54) mounted on the support arrangment parallel to and spaced from the first plate (52).

20. A machine as claimed in Claim 19, in which the capacitive transducer (50) isarranged in a Wheatstone bridge arrangement which is set to provide a null output prior to commencing polishing of the gemstone.

21. A machine as claimed in Claim 20, in which the capacitive transducer (50) is responsive to removal of material from the gemstone by the polishing means, the said removal of material causing a change of capacitance of the transducer (50) which results in the Wheatstone bridge becoming unbalanced to generate an output signal which is inversely proportional to the rate at which material is removed from the gemstone, the generated signal being fed to, and processed by, a microprocessor of the control means.

22. A method of polishing a gemstone, characterised by mounting the gemstone in a holding means which is rotatable about a substantially vertical axis;
bringing a portion of a surface of the gemstone into contact with the polishing means;
rotating the holding means through a revolution about the said vertical axis;
monitoring the rate at which material is removed from the said portion of the surface of the gemstone at predetermined positions of the revolution of the holding means and generating an electrical output signal representative of the rate of removal of material from the said portion of the surface of the gemstone at each position;
processing the signals so generated to ascertain at which position of the revolution of the holding means the optimum rate of removal of material from the portion of the surface of the gemstone is achieved; and
returning the holding means to the said position at which the optimum rate of removal of material from the gemstone is achieved and commencing polishing of that portion of the surface of the gemstone.

23. The method as claimed in Claim 22 which includes mounting the gemstone in a holder mounted at an end of a rotatable shaft arranged at an angle relative to the said vertical axis about which the holding means is rotatable, and adjusting the angle of the shaft relative to the vertical axis to align the gemstone relative to the polishing means.

24. The method as claimed in Claim 23 which includes, after sampling and polishing the said portion of the surface of the gemstone, lifting the gemstone off the polishing means, rotating the rotatable shaft through a predetermined arc to bring another portion of the surface into position to be polished, bringing the said next portion of the surface of the gemstone into contact with the polishing means, and repeating the sampling and polishing process on the said next portion of the surface of the gemstone.

25. The method as claimed in any one of Claims 22 to 24 inclusive in which the holding means is suspended from a support arrangement via a body which is axially displaceable along the said vertical axis relative to the support arrangement, and in which the method includes monitoring the rate of removal of material from the portion of the surface of the gemstone by monitoring the axial displacement of the holding means relative to the support arrangement, the axial displacement of the holding means being proportional to the rate of removal of the material.

26. The method as claimed in Claim 25 which includes monitoring the axial displacement of the holding means relative to the support arrangement by means of an inductive transducer.

27. The method as claimed in Claim 26 which includes causing lines of magnetic flux to be generated in the body of the holding means to cause eddy-current losses in the body, and monitoring variations in the impedance of the transducer as a result of the losses to produce the electrical output signal, the signal being an analog signal which is directly proportional to the rate of removal of material from the portion of the surface of the gemstone being polished.

28. The method as claimed in Claim 27 which includes converting the analog signal to a digital signal for processing by a control means which controls the polishing of the gemstone.

29. The method as claimed in Claim 25 which includes monitoring the axial displacement of the holding means relative to the support arrangement by means of a capacitive transducer.

30. The method as claimed in Claim 29 in which the capacitive transducer comprises a pair of spaced apart parallel plates, a first plate being mounted fast with the support arrangement and a second plate being mounted fast with the body of the holding means to be rotatable therewith, and in which the method includes monitoring variations in the capacitance of the transducer due to variations in the spacing between the plates, the spacing between the plates being variable in response to the removal of material from the portion of the surface of the gemstone.

31. The method as claimed in Claim 30 which includes connecting the plates in an arm of a Wheatstone bridge arrangement and initially balancing the Wheatstone bridge arrangement to provide a null output prior to commencing polishing of the portion of the surface of the gemstone, the removal of material from the portion of the gemstone causing the Wheatstone bridge arrangement to become unbalanced to generate the said electrical output signal which is inversely proportional to the rate of removal of material from the portion of the surface of the gemstone, the output signal being an analog signal.

32. The method as claimed in Claim 31 which includes converting the analog signal to a digital signal for processing by a control means which controls the polishing of the gemstone.

FIG 1

FIG 2

FIG 3

FIG 4A

EP 0 313 369 A2

FIG 4B

EP 0 313 369 A2

FIG 4 C

EP 0 313 369 A2

FIG 4D

| | |
|---|---|
| 4 A | 4 B |
| 4 C | 4 D |

FIG 5

FIG 6

EP 0 313 369 A2

EP 0 313 369 A2

START

ACTIVATE SENSE
CIRCUIT (RING/POT)
SELECT CORRECT
GRAIN,
LOOK-UPTABLE

FETCH CURRENT
GRAIN POINTER
FROM TABLE

CURRENT
FACET
DONE — YES

MOVE GRAIN
TO
CURRENT POINTER

START SMOOTH
MOTOR
DROP ARM

CURRENT
FACET — YES
DONE

NO

READ
KEYBOARD
GRAIN L/R
LIFT
AUTO KEY

ONE OF
ABOVE KEYS — YES
PRESSED

PERFORM
ACTION
ACCORDING
TO KEY
PRESSED

LIFT
KEY — YES
PRESSED

READ
KEYBOARD
FACET L/R
GRAIN L/R
RESET
WASS L/R

CHECK
ABORT
TIMER

RESET
KEY — NO

START
KEY — YES

NO

YES

WAS
DIFFERENT
FACET
SELECTED — YES

NO

FIG 7A

EP 0 313 369 A2

FIG 7B

START ON
INTERRUPT

PRESET
TIME
UP

NO

YES

MEASURE
THE
CUT RATE

STONE
ALREADY ON
GRAIN

YES

HAVE
POSITIONS
BEEN TRIED

NO

LEFT
MOVEMENT
TRIED

NO

MOVE GRAIN
LEFT

NO

YES

YES

REQ
CUT
RATE

REQ
CUT
RATE

NO

RATE
CHECKED

YES

RIGHT
MOVEMENT
TRIED

NO

MOVE
GRAIN
RIGHT

NO

YES

YES

RATE
ABOVE
PREVIOUS

NO

RATE
ABOVE
HIGHEST

MOVE TO
FIRST GRAIN
POSITION

YES

L/R
TRIED

YES

STORE CURRENT
RATE AND
GRAIN
POSITION

NO

INDICATE
THAT
POSITIONS
TRIED

INCREMENT
LOW-RATE
COUNT

ALL
POSSIBLE
CLOCK GRAIN
POSITIONS
TRIED

YES

SELECT AND
MOVE TO BEST
CUT RATE
POSITION

NO

REQ.
COUNT

YES

ABORT FACET
IMMEDIATELY
ON RETURN
TO MAIN
ROUTINE

NO

SELECT AND
MOVE TO
NEXT GRAIN
POSITION

INDICATE
THAT
"ON GRAIN"

RESET TIMER
FOR
INTERRUPT

END

FIG 8